# EUROPEAN PATENT APPLICATION

(11) **EP 1 239 473 A1**
(43) Date of publication of application: **11.09.2002**
(21) Application number: 01500144.9
(22) Date of filing: 08.06.2001
(51) Int. Cl.: G11B 20/00, G06F 1/00

(54) **Anti-copy protection system for CD-ROM and/or DVD-ROM**

(30) Priority: 23.02.2001 ES 200100435
(71) Applicant: MPO Iberica, S.A., 28925 Alcorcon (Madrid) (ES)
(72) Inventor: Auzanne, Hervé, 28925 Alcorcon (Madrid) (ES); Torrejon Rosas, Alberto, 28925 Alcorcon (Madrid) (ES); Garcia Abadillo, Carlos, 28925 Alcorcon (Madrid) (ES)
(74) Representative: Gonzalez Vacas, Eleuterio

(57) **Abstract**

The system is conceived to avoid the reproduction of the files stored in a CD-ROM, by the creation of a ring in the CD-ROM. For that purpose and corresponding to each file to be protected, one or more files destined to be deliberately damaged are introduced into the CD-ROM during the mastering process, while it is being recorded with a laser beam by changing the laser intensity in such a way that when trying to download the contents of the CD-ROM for copying, the arising of said damaged files interrupts the data reading and, consequently, interrupts the recording.

## Description

### OBJECT OF THE INVENTION

The present invention refers to a protection system for the contents of a CD-ROM, which allows the normal use of the CD-ROM but impedes the copying or re-recording of its contents on some other support.

Therefore, the object of the invention is to achieve avoiding fraudulent actions in the computer scope, such as, for example the making of software illegal copies.

### BACKGROUND OF THE INVENTION

As is well known, a CD-ROM contains a Lead-in which is similar to a hard drive FAT, which finds out information on the contents of the CD, specifically data such as length, number of tracks, number of sessions, location of the files, etc. After the Lead-in comes the Program Area, which contains the file data, and then comes a Lead-out which contains nothing but an indication of the CD end.

The files stored in the CD-ROM, just like they can be read, can be copied to another support, in a way that said copies entail a large loss to software developing companies.

### DESCRIPTION OF THE INVENTION

The system that the invention proposes solves in a fully satisfactory way the problem exposed above in such a way that it allows the reading of the program or programs stored in the CD-ROM, but it impedes the downloading of said files when a copy is attempted on to some other support.

For that purpose, the system is based on a change of the intensity of the Dropout laser in one place or some specific places, according to the application that the very CD holds.

In actuality, this intensity change is materialized in the inclusion in the CD of one or several rings that damage the data stored in one or more files corresponding to a particular location of the CD.

Said rings to damage the data are made during the mastering process, specifically while the laser is being engraved on the crystal, so that the intensity varies or simply there is no laser intensity at all in those locations wanted to be damaged.

This way, it is achieved that the CD-ROM duplication be impossible in a recorder because there is no recorder that can go on with reading the data skipping this ring or these rings. On the other hand, the whole duplication of the data stored in the CD-ROM, file or files, becomes impossible as well since the ring affects the contents of one file or more than one files. Copying said damaged files is impossible because their contents are damaged or they are impossible to read.

Obviously, the remainder of the files, those that are not affected by the rings will be prone to being copied or duplicated.

### PREFERRED EMBODIMENT OF THE INVENTION

The protection system can be made in practicality following two different ways, one in collaboration with the CD-ROM owner and the second one without said collaboration.

In the first case, when there is collaboration with the CD-ROM owner, he will provide the CD-ROM with the files to be modified, such as FILE.DLL, FILE.TXT, FILE.DOC, etc. Said files must be included in one or more directories, such as \WIN\VIN\FILE.DLL

Useful files for the application can be inside the directory (no only for the protection) and in any case, the files for protection must go together and next to one another for the ring generation to be possible.

These files for the protection cannot be program files and will be used only by and for the protection system only.

For the protection system to be more useful, a call to the existence of these protection files can be inserted in the path of the executable file, querying whether said files exist, their size, their creation date, etc. but the content of said file should never be attempted to be read.

These files have the specific purpose to be damaged configuring the aforementioned protection rings, so that when attempting the downloading of said files, which is needed for its recording, a signal is generated that impedes to continue with the recording program.

In the second case, that is, when there is no collaboration from the CD-ROM owner, he just provides the CD-ROM or CD-ROM's that he wants to protect, so that the company that introduces the protection system will include a number of files into the CD-ROM and will generate one or more rings in the place where these files are during the copying. Consequently, said aspects will not be possible to be copied, nor the disc copied in its integrity.

Logically, just like in the preceding case, those files not protected by the ring will be prone to be copied and a CD-ROM generated with said unprotected files.

## Claims

1. CD-ROM and/or DVD-ROM anti-copy protection system, which is especially conceived for impeding the recording of the total CD-ROM contents and is **characterized by** generating one or more rings at the precise location of a group of files which during the download process of the CD-ROM contents for copying or playing back generates an error signal that interrupts the downloading program thus avoiding the reproduction of the corresponding files.

2. CD-ROM and/or DVD-ROM anti-copy protection system according to claim 1, **characterized in that** each ring damages the data stored in one or more files, in one or several specific CD-ROM locations, in such a way that the files of said CD-ROM can be in their entirety or in a part predetermined by them.

3. CD-ROM and/or DVD-ROM anti-copy protection system according to the preceding claims, **characterized in that** the aforementioned rings for the damaging of the file data are produced in the mastering process, while the laser engraving is being made on the crystal by changing the intensity of the Dropout laser, or the absence of the laser intensity at all, in the specific CD-ROM locations to be damaged, according to the application that CD-ROM holds.
